# EUROPEAN PATENT SPECIFICATION

(11) **EP 3 929 003 B1**
(45) Date of publication and mention of the grant of the patent: **04.12.2024**
(21) Application number: 21175607.7
(22) Date of filing: 25.05.2021
(51) Int. Cl.: B60C 1/00, C08C 19/22, C08C 19/25, C08L 9/00

(54) **RUBBER COMPOSITION FOR TIRE**
KAUTSCHUKZUSAMMENSETZUNG FÜR REIFEN
COMPOSITION DE CAOUTCHOUC POUR PNEU

(30) Priority: 23.06.2020 JP 2020108216
(43) Date of publication of application: 29.12.2021
(73) Proprietor: Sumitomo Rubber Industries, Ltd., Kobe-shi, Hyogo 651-0072 (JP)
(72) Inventor: SAKAGUCHI, Daiki, Kobe-shi, 651-0072 (JP)
(74) Representative: TBK

(56) References cited:
- JP-A- 2015 110 704
- JP-B2- 6 532 184

## Description

### TECHNICAL FIELD

The present invention relates to a rubber composition and a tire having a tire member composed of the rubber composition.

### BACKGROUND OF THE INVENTION

As a method of improving fuel efficiency and wet grip performance of a tire with a good balance, for example, a method of compounding a silica and a silane coupling agent is known (JP 2004-59599 A).

### SUMMARY OF THE INVENTION

However, since a silica has a lower affinity for a rubber component compared with a carbon black, a domain of the rubber component constrained in the rubber composition easily becomes non-uniform, and there is a concern that temperature dependency of heat generation may increase.

An object of the present invention is to provide a rubber composition for a tire that solves the above-described problem, the rubber composition having improved fuel efficiency at low temperature and normal temperature by improving the temperature dependency of heat generation.

As a result of intensive studies, the present inventor has found that the above-described problem can be solved by using a modified liquid butadiene-based rubber and a hydrogenated thermoplastic elastomer in combination for a rubber composition comprising a silica, and completed the present invention.

That is, the present invention relates to
[1] A rubber composition for a tire comprising a rubber component comprising a butadiene-based rubber, a modified liquid butadiene-based rubber, a hydrogenated thermoplastic elastomer, and a silica,
[2] The rubber composition for a tire of the above [1], wherein the modified liquid butadiene-based rubber is a liquid butadiene-based rubber modified at its terminal with one or more groups selected from the group consisting of a hydroxyl group, a carboxyl group, an acryloyl group, and a methacryloyl group,
[3] The rubber composition for a tire of the above [1] or [2], comprising a masterbatch comprising the silica and the modified liquid butadiene-based rubber,
[4] The rubber composition for a tire of any one of the above [1] to [3], comprising 15 to 70 parts by mass of the modified liquid butadiene-based rubber based on 100 parts by mass of the silica,
[5] The rubber composition for a tire of any one of the above [1] to [4], comprising 5 to 40 parts by mass of the modified liquid butadiene-based rubber, 5 to 40 parts by mass of the hydrogenated thermoplastic elastomer, and 30 to 120 parts by mass of the silica based on 100 parts by mass of the rubber component comprising 50 to 80% by mass of the butadiene-based rubber,
[6] The rubber composition for a tire of any one of the above [1] to [5], further comprising a mercapto-based silane coupling agent,
[7] The rubber composition for a tire of any one of the above [1] to [6], further comprising an aromatic ring-containing resin,
[8] The rubber composition for a tire of the above [7], wherein the aromatic ring-containing resin has a softening point of 90 to 160°C,
[9] A tire having a tire member composed of the rubber composition for a tire of any one of the above [1] to [8].

The rubber composition for a tire according to the present invention has a good silica dispersibility and improved fuel efficiency at low temperature and normal temperature.

### DETAILED DESCRIPTION

The rubber composition for a tire according to one embodiment of the present disclosure is a rubber composition for a tire comprising a rubber component comprising a diene-based rubber, a modified liquid butadiene-based rubber, a hydrogenated thermoplastic elastomer, and a silica.

Although it not intended to be bound by theory, in the present disclosure, the following is considered as a mechanism by which dispersibility of silica can be improved and fuel efficiency at low temperature (about 10°C) and normal temperature (about 25°C) can be improved. That is, since a modifying group of a modified liquid butadiene-based rubber is adsorbed on a silanol group on the surface of silica, the modified liquid butadiene-based rubber and silica have a high affinity, and autoagglutination of silica can be suppressed. Moreover, since the hydrogenated thermoplastic elastomer has a high compatibility with the modified liquid butadiene-based rubber and the butadiene-based rubber with high polarity, silica interacting with the modified liquid butadiene-based rubber becomes easily dispersed in a butadiene-based rubber phase, and a domain size of the rubber phase constrained by silica becomes reduced. Therefore, it is considered that energy loss required for phase transition is reduced near a glass transition point of the rubber composition, so that the temperature dependency of heat generation is improved, and the fuel efficiency at low temperature and normal temperature can be improved.

The modified liquid butadiene-based rubber is preferably a liquid butadiene-based rubber modified at its terminal with one or more groups selected from the group consisting of a hydroxyl group, a carboxyl group, an acryloyl group, and a methacryloyl group.

The rubber composition for a tire preferably comprises a masterbatch comprising the silica and the modified liquid butadiene-based rubber. By bringing the silica and the modified liquid butadiene-based rubber to be a masterbatch, the modified liquid butadiene-based rubber can be uniformly bonded to the surface of the silica, so that an effect of improving dispersion of silica becomes easily obtained.

The rubber composition for a tire preferably comprises 15 to 70 parts by mass of the modified liquid butadiene-based rubber based on 100 parts by mass of the silica.

The rubber composition for a tire preferably comprises 5 to 40 parts by mass of the modified liquid butadiene-based rubber, 5 to 40 parts by mass of the hydrogenated thermoplastic elastomer, and 30 to 120 parts by mass of the silica based on 100 parts by mass of the rubber component comprising 50 to 80% by mass of the butadiene-based rubber.

The rubber composition for a tire preferably further comprises a mercapto-based silane coupling agent.

The rubber composition for a tire preferably further comprises an aromatic ring-containing resin.

A softening point of the aromatic ring-containing resin is preferably 90 to 160°C.

Another aspect of the present disclosure is a tire having a tire member composed of the rubber composition for a tire.

Besides, in the present specification, a numerical range identified with "to" means to include the numerical values of both ends.

### <Rubber component>

The rubber component according to the present disclosure comprises a butadiene-based rubber as an essential component. A content of the butadiene-based rubber in the rubber component is preferably 50% by mass or more, more preferably 55% by mass or more, further preferably 60% by mass or more, from the viewpoint of the effects of the present disclosure. Moreover, the content of the butadiene-based rubber in the rubber component is preferably 80% by mass or less, more preferably 75% by mass or less, from the viewpoint of the effects of the present disclosure.

The butadiene-based rubber is not particularly limited as long as it is a polymer having a butadiene skeleton, and examples thereof include, for example, a styrene-butadiene rubber (SBR) and a butadiene rubber (BR), and the like, and it is preferable to use a SBR and a BR in combination.

### (SBR)

The SBR is not particularly limited, and examples thereof include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, a S-SBR is preferable, and a modified S-SBR is more preferable.

Examples of the modified SBR include a modified SBR into which a functional group usually used in this field is introduced. Examples of the functional group include, for example, an amino group (preferably an amino group in which a hydrogen atom of the amino group is substituted with a C₁₋₆ alkyl group), an amide group, a silyl group, an alkoxysilyl group (preferably a C₁₋₆ alkoxysilyl group), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably a C₁₋₆ alkoxy group), a hydroxyl group, an oxy group, an epoxy group, and the like. Besides, these functional groups may have a substituent. Examples of the substituent include, for example, a functional group such as an amino group, an amide group, an alkoxysilyl group, a carboxyl group, and a hydroxyl group. Examples of the modified SBR include a hydrogenated SBR, an epoxidized SBR, a tin-modified SBR, and the like.

As the SBR, an oil-extended SBR can be used, or a non-oil-extended SBR can be used. When an oil-extended SBR is used, an oil-extended amount of SBR, that is, a content of an oil-extended oil comprised in the SBR is preferably 10 to 50 parts by mass based on 100 parts by mass of a rubber solid content of the SBR.

The SBRs listed above may be used alone or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, because the effects of the present disclosure can be obtained more appropriately. Moreover, the styrene content is preferably 60% by mass or less, more preferably 50% by mass or less, further preferably 45% by mass or less, further preferably 40% by mass or less. Besides, in the present specification, the styrene content of the SBR is calculated by ¹H-NMR measurement.

A vinyl content of the SBR is preferably 10 mol% or more, more preferably 15 mol% or more, further preferably 20 mol% or more, because the effects of the present disclosure can be obtained more appropriately. Moreover, the vinyl bond amount is preferably 80 mol% or less, more preferably 75 mol% or less, further preferably 70 mol% or less. Besides, in the present specification, the vinyl content (1,2-bond butadiene unit amount) is measured by infrared absorption spectrometry.

A weight-average molecular weight (Mw) of the SBR is preferably 200,000 or more, more preferably 250,000 or more, further preferably 300,000 or more, because the effects of the present disclosure can be obtained more appropriately. Moreover, the Mw is preferably 2,000,000 or less, more preferably 1,800,000 or less. Besides, in the present specification, the weight-average molecular weight (Mw) can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

A content of the SBR when compounded in the rubber component is preferably 10% by mass or more, more preferably 20% by mass or more, further preferably 30% by mass or more, particularly preferably 40% by mass or more, from the viewpoint of the effects of the present disclosure. On the other hand, an upper limit of the content of the SBR is not particularly limited, and can be, for example, 90% by mass or less, 85% by mass or less, 80% by mass or less, or 75% by mass or less, and the rubber component may be composed of a SBR only. When an oil-extended SBR is used as the SBR, a content of the SBR itself as a rubber solid content comprised in the oil-extended SBR is defined as a content of the SBR in the rubber component.

### (BR)

The BR is not particularly limited, and those commonly used in the tire industry can be used, such as, for example, a BR having a cis content of less than 50 mol% (a low cis BR), a BR having a cis content of 90 mol% or more (a high cis BR), a rare earth-based butadiene rubber synthesized using a rare earth element-based catalyst (a rare earth-based BR), a BR containing a syndiotactic polybutadiene crystal (a SPB-containing BR), and a modified BR (a high cis modified BR, a low cis modified BR). Examples of the modified BR include a BR modified with a functional group or the like similar to that described in the SBRs above. These BRs may be used alone or two or more thereof may be used in combination.

As the high cis BR, for example, those commercially available from Zeon Corporation, Ube Industries, Ltd., JSR Corporation, etc. can be used. When a high cis BR is compounded, low temperature characteristics and abrasion resistance can be improved. The cis content is preferably 95 mol% or more, more preferably 96 mol% or more, further preferably 97 mol% or more, particularly preferably 98 mol% or more. Besides, in the present specification, the cis content (cis-1,4-bond butadiene unit amount) is a value calculated by infrared absorption spectrometry.

As the rare earth-based BR, those synthesized using a rare earth element-based catalyst and having a vinyl content of preferably 1.8 mol% or less, more preferably 1.0 mol% or less, further preferably 0.8% mol or less, and a cis content of preferably 95 mol% or more, more preferably 96 mol% or more, further preferably 97 mol% or more, particularly preferably 98 mol% or more can be used. As the rare earth-based BR, for example, those commercially available from LANXESS, etc. can be used.

Examples of the SPB-containing BR include those in which a 1,2-syndiotactic polybutadiene crystal is chemically bonded with the BR and dispersed, but not those in which the crystal is simply dispersed in the BR. As such SPB-comprising BR, those commercially available from Ube Industries, Ltd., etc. can be used.

As the modified BR, a modified butadiene rubber (modified BR) modified with a functional group comprising at least one element selected from the group consisting of silicon, nitrogen, and oxygen at its terminal and/or main chain is appropriately used.

Examples of other modified BRs include those obtained by polymerizing 1,3-butadiene with a lithium initiator and then adding a tin compound and in which a modified BR molecule is bonded by a tin-carbon bond at its terminal (a tin-modified BR), and the like. Moreover, the modified BR may be hydrogenated or may not be hydrogenated.

The BRs listed above may be used alone or two or more thereof may be used in combination.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity and the like. Besides, the Mw can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

A content of the BR when compounded in the rubber component is preferably 5% by mass or more, more preferably 10% by mass or more. On the other hand, it is preferably 50% by mass or less, more preferably 40% by mass or less, further preferably 30% by mass or less, from the viewpoint of the effects of the present disclosure.

### (Other rubber components)

The rubber component may comprise rubber components other than the butadiene-based rubber as long as they do not affect the effects of the present disclosure. As other rubber components, a cross-linkable rubber component commonly used in the tire industry can be used, and examples thereof include, for example, an isoprene-based rubber, a styrene-isoprene rubber (SIR), a chloroprene rubber (CR), an acrylonitrile-butadiene rubber (NBR), a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like, preferably an isoprene-based rubber. These other rubber components may be used alone or two or more thereof may be used in combination. The rubber component of the present disclosure preferably comprises a SBR and/or a BR and an isoprene-based rubber, more preferably comprises a SBR, a BR, and an isoprene-based rubber, and may be composed of a SBR, a BR, and an isoprene-based rubber only.

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. The IR is not particularly limited, and those common in the tire industry such as, for example, an IR 2200 can be used. Examples of the purified NR can include a deproteinized natural rubber (DPNR), a high-purity natural rubber, and the like, and examples of the modified NR can include an epoxidized natural rubber (ENR), a hydrogenated natural rubber (HNR), a grafted natural rubber, and the like, and examples of the modified IR can include an epoxidized isoprene rubber, a hydrogenated isoprene rubber, a grafted isoprene rubber, and the like. These isoprene-based rubbers may be used alone or two or more thereof may be used in combination.

A content of the isoprene-based rubber (preferably the NR) when compounded in the rubber component is preferably 10% by mass or more, more preferably 20% by mass or more, further preferably 30% by mass or more, particularly preferably 40% by mass or more, from the viewpoint of the effects of the present disclosure. On the other hand, an upper limit of the content of the isoprene-based rubber is not particularly limited, and can be, for example, 90% by mass or less, 85% by mass or less, 80% by mass or less, or 75% by mass or less.

### <Modified liquid butadiene-based rubber>

The modified liquid butadiene-based rubber is not particularly limited, and examples thereof include, for example, a liquid butadiene rubber modified at its terminal and/or main chain (a modified liquid BR) and a liquid styrene-butadiene rubber modified at its terminal and/or main chain (a modified liquid SBR), and the like, and may include those in which these rubbers are hydrogenated. Among them, a terminal-modified liquid BR that may be hydrogenated is preferable. Besides, in the present disclosure, the term "liquid" means that a liquid state at a normal temperature (25°C). The modified liquid butadiene-based rubber of the present disclosure shall be not comprised in the above-described rubber components.

The modifying group is not particularly limited, and examples thereof include, for example, a silyl group, a trialkoxysilyl group, an amino group, an amide group, an isocyanate group, an imino group, an imidazole group, an urea group, an ether group, a carbonyl group, an oxycarbonyl group, a sulfonyl group, a sulfinyl group, a thiocarbonyl group, an ammonium group, an imide group, a hydrazo group, an azo group, a diazo group, a nitrile group, a pyridyl group, an alkoxy group, a hydroxyl group, an oxy group, a carboxyl group, an epoxy group, an acrylic group, a methacryl group, an acryloyl group, a methacryloyl group, and the like. Among them, one or more groups selected from the group consisting of a hydroxyl group, a carboxyl group, an acryloyl group, and a methacryloyl group are preferable, and one or more groups selected from the group consisting of an acryloyl group and a methacryloyl group are more preferable.

As the modified liquid butadiene-based rubber, commercially available products or those synthetically obtained may be used. As commercially available products, for example, those manufactured by Nippon Soda Co., Ltd., those manufactured by Cray Valley, those manufactured by Noveon, and the like can be used. A synthesis method is not particularly limited, and a known method can be used.

A number-average molecular weight (Mn) of the modified liquid butadiene-based rubber is preferably less than 50,000, more preferably 25,000 or less, further preferably 10,000 or less, further preferably 7,000 or less. A lower limit of the number-average molecular weight (Mn) is, but not particularly limited to, for example, 1,000 or more. When the number-average molecular weight of the modified liquid butadiene-based rubber is within the above-described ranges, the effects of the present disclosure can be better exhibited. Besides, in the present specification, the number-average molecular weight (Mn) is a value in terms of a standard polystyrene using gel permeation chromatography (GPC).

The modified liquid butadiene-based rubber may be used alone or two or more thereof may be used in combination.

A content of the modified liquid butadiene-based rubber based on 100 parts by mass of the rubber component is preferably 5 parts by mass or more, more preferably 10 parts by mass or more, further preferably 15 parts by mass or more. Moreover, the content is preferably 40 parts by mass or less, more preferably 35 parts by mass or less. When the content of the modified liquid butadiene-based rubber is within the above-described ranges, the effects of the present disclosure can be better exhibited.

### <Hydrogenated thermoplastic elastomer>

The rubber composition according to the present disclosure comprises a hydrogenated thermoplastic elastomer from the viewpoint of improving grip performance.

In the present specification, the "hydrogenated thermoplastic elastomer" refers to a block copolymer having a polymer block A comprising an aromatic vinyl monomer unit as a main constituent unit (hereinafter, also simply referred to as a polymer block A) and a polymer block B comprising a conjugated diene monomer unit as a main constituent unit (hereinafter, also simply referred to as a polymer block B), wherein a part or all of the polymer block B comprising a conjugated diene monomer unit as a main constituent unit is hydrogenated. Besides, the hydrogenated thermoplastic elastomer of the present disclosure shall be not comprised in the rubber component.

The hydrogenated thermoplastic elastomer is a copolymer having a hard portion (a hard segment) composed of a polymer block A and a soft portion (a soft segment) composed of a polymer block B. A molecular structure of the hydrogenated thermoplastic elastomer is, but not particularly limited to, preferably a molecular structure having a polymer block A at one end or both ends and a polymer block B at the portion other than the ends, more preferably a structure having no polymer block A at the main chain portion other than the ends.

Examples of the aromatic vinyl monomer constituting the polymer block A include styrene, o-methylstyrene, p-methylstyrene, p-t(tertiary)-butylstyrene, 1,3-dimethylstyrene, α-methylstyrene, vinyl naphthalene, vinyl anthracene, and the like, and generally, easily available styrene is selected.

Examples of the conjugated diene monomer constituting the polymer block B include butadiene, isoprene, 1,3-pentadiene, and the like.

A content of the polymer block A in the hydrogenated thermoplastic elastomer is preferably 5% by mass or more, more preferably 10% by mass or more, from the viewpoint of grip performance. Moreover, it is preferably 30% by mass or less, more preferably 25% by mass or less, from the viewpoint of suppressing heat generation.

Specific examples of the hydrogenated thermoplastic elastomers that can be used in the present disclosure include, for example, a styrene-isobutylene block copolymer (SIB), a styrene-butadiene-styrene block copolymer (SBS), a styrene-isoprene-styrene block copolymer (SIS), a styrene-ethylene-butylene block copolymer (SEB), a styrene-ethylene-propylene block copolymer (SEP), a styrene-ethylene-butylene-styrene block copolymer (SEBS), a styrene-ethylene-butylene-ethylene block copolymer (SEBC), a hydrogenated styrene-butadiene copolymer (HSBR), a styrene-ethylene-propylene-styrene block copolymer (SEPS), a styrene-ethylene-ethylene-propylene-styrene block copolymer (SEEPS), a styrene-butadiene-butylene-styrene block copolymer (SBBS), and the like. These hydrogenated thermoplastic elastomers may be used alone or two or more thereof may be used in combination.

As the hydrogenated thermoplastic elastomer, commercially available products or those synthetically obtained may be used. As commercially available products, for example, those manufactured by Asahi Kasei Corporation, those manufactured by Kuraray Co., Ltd., and the like can be used. A synthesis method is not particularly limited, and a known method can be used.

A content of the hydrogenated thermoplastic elastomer based on 100 parts by mass of the rubber component is preferably 5 parts by mass or more, more preferably 7 parts by mass or more, further preferably 10 parts by mass or more, from the viewpoint of silica dispersibility. Moreover, it is preferably 40 parts by mass or less, more preferably 35 parts by mass or less, further preferably 30 parts by mass or less, particularly preferably 25 parts by mass or less, from the viewpoint of fuel efficiency.

### < Filler>

The filler according to the present disclosure comprises a silica as an essential component, and may comprise fillers other than silica. As fillers other than silica, any filler commonly used in the tire industry can be used, for example, a carbon black, an aluminum hydroxide, an alumina (aluminum oxide), a clay, a calcium carbonate, a mica, and the like. Among them, a carbon black is preferable. Moreover, the filler may be a filler comprising a silica and a carbon black, or may be a filler composed of a silica and a carbon black only.

### (Silica)

Silica is not particularly limited, and for example, those common in the tire industry can be used, such as silica prepared by a dry process (anhydrous silica) and silica prepared by a wet process (hydrous silica). Among them, hydrous silica prepared by a wet process is preferable because it has many silanol groups. As silica, for example, those manufactured and sold by Evonik Degussa, Solvay, Tosoh Silica Corporation, Tokuyama Corporation, etc. can be used. These silicas may be used alone or two or more thereof may be used in combination.

An average primary particle size of silica is preferably 22 nm or less, more preferably 20 nm or less, further preferably 18 nm or less, particularly preferably 16 nm or less. A lower limit of the average primary particle size is, but not particularly limited to, preferably 1 nm or more, more preferably 3 nm or more, further preferably 5 nm or more. When the average primary particle size of silica is in the above-described ranges, the dispersibility of silica can be improved more, and the reinforcing property, wet grip performance, and abrasion resistance can be further improved. Besides, the average primary particle size of silica can be calculated by observing silica with a transmission electron microscope or a scanning electron microscope, measuring 400 or more primary particles of silica observed in the field of view, and averaging them.

A nitrogen adsorption specific surface area (N₂SA) of silica is preferably 140 m²/g or more, more preferably 160 m²/g or more, further preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica in the present specification is a value measured by the BET method according to ASTM D3037-93.

A content of silica based on 100 parts by mass of the rubber component is preferably 30 parts by mass or more, more preferably 40 parts by mass or more, further preferably 50 parts by mass or more, further preferably 55 parts by mass or more, particularly preferably 65 parts by mass or more, from the viewpoint of wet grip performance. Moreover, it is preferably 120 parts by mass or less, more preferably 110 parts by mass or less, further preferably 100 parts by mass or less, further preferably 90 parts by mass or less, particularly preferably 80 parts by mass or less, from the viewpoints of silica dispersibility and fuel efficiency.

### (Silane coupling agent)

Silica is preferably used in combination with a silane coupling agent. The silane coupling agent is not particularly limited, and any silane coupling agent conventionally used in combination with silica in the tire industry can be used. Examples of such silane coupling agent include, for example, a sulfide-based silane coupling agent such as bis(3-triethoxysilylpropyl)disulfide and bis(3-triethoxysilylpropyl)tetrasulfide; a mercapto-based silane coupling agent such as 3-mercaptopropyltrimethoxysilane, NXT-Z100, NXT-Z45, and NXT manufactured by Momentive Performance Materials; a silane coupling agent having a thioester group such as 3-octanoylthio-1-propyltriethoxysilane, 3-hexanoylthio-1-propyltriethoxysilane, and 3-octanoylthio-1-propyltrimethoxysilane; a vinyl-based silane coupling agent such as vinyltriethoxysilane and vinyltrimethoxysilane; an amino-based silane coupling agent such as 3-aminopropyltriethoxysilane, 3-aminopropyltrimethoxysilane, and 3-(2-aminoethyl)aminopropyltriethoxysilane; a glycidoxy-based silane coupling agent such as γ-glycidoxypropyltriethoxysilane and γ-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane; and the like. Among them, a silane coupling agent having a sulfide group, a silane coupling agent having a mercapto group, and a silane coupling agent having a thioester group are preferable, and a silane coupling agent having a mercapto group is more preferable. These silane coupling agents may be used alone or two or more thereof may be used in combination.

A content of the silane coupling agent when compounded based on 100 parts by mass of silica is preferably 0.1 parts by mass or more, more preferably 1 part by mass or more, further preferably 3 parts by mass or more, particularly preferably 5 parts by mass or more. Moreover, the content is preferably 20 parts by mass or less, more preferably 18 parts by mass or less, based on 100 parts by mass of silica.

A content of the silane coupling agent when compounded based on 100 parts by mass of the rubber component is preferably 0.1 parts by mass or more, more preferably 1 part by mass or more, further preferably 2 parts by mass or more, particularly preferably 3 parts by mass or more. Moreover, the content is preferably 20 parts by mass or less, more preferably 15 parts by mass or less, further preferably 12 parts by mass or less, based on 100 parts by mass of the rubber component.

### (Carbon black)

As carbon black, those commonly used in the tire industry can be appropriately used, for example, GPF, FEF, HAF, ISAF, SAF, and the like, or N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like. As these carbon blacks, those manufactured and sold by, for example, Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc., and the like can be used. These carbon blacks may be used alone or two or more thereof may be used in combination.

A nitrogen adsorption specific surface area (N₂SA) of carbon black is preferably 50 m²/g or more, more preferably 80 m²/g or more, further preferably 100 m²/g or more. When it is the lower limit or higher, good abrasion resistance and grip performance tend to be obtained. Moreover, the N₂SA is preferably 200 m²/g or less, more preferably 160 m²/g or less, further preferably 150 m²/g or less. When it is the upper limit or lower, a good dispersion of carbon black tends to be obtained. Besides, the N₂SA of carbon black is calculated by JIS K 6217-2: 2001.

A content of carbon black is, from the viewpoint of reinforcing property, preferably 1 part by mass or more, more preferably 3 parts by mass or more, further preferably 5 parts by mass or more based on 100 parts by mass of the rubber component. Moreover, it is preferably 100 parts by mass or less, more preferably 50 parts by mass or less, further preferably 30 parts by mass or less, particularly preferably 15 parts by mass or less, from the viewpoints of processability and fuel efficiency.

A content of the entire filler based on 100 parts by mass of the rubber component is preferably 10 parts by mass or more, more preferably 25 parts by mass or more, further preferably 40 parts by mass or more, particularly preferably 50 parts by mass or more, from the viewpoint of wet grip performance. Moreover, it is preferably 120 parts by mass or less, more preferably 100 parts by mass or less, further preferably 95 parts by mass or less, particularly preferably 90 parts by mass or less, from the viewpoint of abrasion resistance.

A content of silica in the filler is preferably 50% by mass or more, more preferably 60% by mass or more, further preferably 70% by mass or more, from the viewpoint of fuel efficiency. Moreover, it is preferably 99% by mass or less, more preferably 95% by mass or less, from the viewpoints of weather resistance and reinforcing property.

### <Other compounding agents>

The rubber composition according to the present disclosure appropriately comprises compounding agents commonly used in the conventional tire industry, for example, a resin component, oil, wax, processing aid, an antioxidant, stearic acid, zinc oxide, a vulcanizing agent such as sulfur, a vulcanization accelerator, and the like, in addition to the above-described components.

The resin component is not particularly limited, and examples thereof include a petroleum resin, a terpene-based resin, a rosin-based resin, a phenol-based resin, and the like which are commonly used in the tire industry, and they may be hydrogenated. These resin components may be used alone or two or more thereof may be used in combination.

In the present specification, a "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, and isoprene. As the C5-based petroleum resin, a cyclopentadiene-based resin is appropriately used. As the cyclopentadiene-based resin, a dicyclopentadiene resin (DCPD resin), a cyclopentadiene resin, a methylcyclopentadiene resin (non-hydrogenated cyclopentadiene-based resin), and those obtainable by hydrogenating these cyclopentadiene-based resins (hydrogenated cyclopentadiene-based resins). As the cyclopentadiene-based resin, for example, those commercially available from Exxon Mobil Corporation, etc. can be used.

In the present specification, an "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to be processed, and good in heat generation. As the aromatic vinyl-based resin, for example, those commercially available from Kraton Corporation, Eastman Chemical Company, etc. can be used.

In the present specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, and dipentene; an aromatic-modified terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as a raw material for the aromatic-modified terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like. As the terpene-based resin, for example, those commercially available from Yasuhara Chemical Co., Ltd., etc. can be used.

The rosin-based resin is not particularly limited, and examples thereof include, for example, a natural resin rosin, a modified rosin resin, and the like. As the rosin-based resin, for example, those commercially available from Arakawa Chemical Industries, Ltd., Harima Chemicals Group, Inc., etc. can be used.

The phenol-based resin is not particularly limited, and examples thereof include a phenolformaldehyde resin, an alkylphenolformaldehyde resin, an alkylphenol acetylene resin, an oil-modified phenolformaldehyde resin, and the like.

As the resin component, an aromatic ring-containing resin such as an aromatic-based petroleum resin, a C5-C9-based petroleum resin, an aromatic modified terpene resin, a terpene phenol resin, and a phenol-based resin is appropriately used, and an aromatic modified terpene resin is more preferable.

A softening point of the resin component (particularly the aromatic ring-containing resin) is preferably 90°C or higher, more preferably 95°C or higher, further preferably 100°C or higher, from the viewpoint of wet grip performance. Moreover, it is preferably 160°C or lower, more preferably 150°C or lower, further preferably 140°C or lower, from the viewpoints of processability and improvement in dispersibility of a rubber component with a filler. Besides, in the present specification, the softening point is defined as a temperature at which a sphere drops when the softening point specified in JIS K 6220-1: 2001 is measured with a ring and ball softening point measuring device.

When the rubber composition comprises the resin component (particularly the aromatic ring-containing resin), the content thereof is, from the viewpoint of wet grip performance, preferably 1 part by mass or more, more preferably 5 parts by mass or more, further preferably 10 parts by mass or more, particularly preferably 12 parts by mass or more based on 100 parts by mass of the rubber component. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include a mild extraction solvate (MES), a treated distillate aromatic extract (TDAE), a heavy naphthene-based oil, and the like.

When the rubber composition comprises the oil, the content thereof is, from the viewpoint of processability, preferably 5 parts by mass or more, more preferably 10 parts by mass or more, further preferably 15 parts by mass or more based on 100 parts by mass of the rubber component. Moreover, it is preferably 100 parts by mass or less, more preferably 80 parts by mass or less, further preferably 60 parts by mass or less, from the viewpoint of abrasion resistance. Besides, in the present specification, the content of oil also includes an amount of oil contained in an oil-extended rubber.

Wax is not particularly limited, and those commonly used in the tire industry can be appropriately used, and examples thereof include, for example, a petroleum-based wax, a mineral-based wax, a synthetic wax, and the like. Among them, a petroleum-based wax is preferable. Examples of the petroleum-based wax include, for example, a paraffin wax, a microcrystalline wax, and the like. As wax, for example, those manufactured by Ouchi Shinko Chemical Industrial Co., Ltd., those manufactured by Nippon Seiro Co., Ltd., those manufactured by Paramelt B.V., and the like. can be used. These wax may be used alone or two or more thereof may be used in combination.

When the rubber composition comprises the wax, the content thereof is, from the viewpoint of weather resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone or two or more thereof may be used in combination. Among them, a mixture of a fatty acid metal salt, an amide ester, and a mixture of a fatty acid metal salt and an amide ester or a fatty acid amide are preferable, and a mixture of a fatty acid metal salt and a fatty acid amide is more preferable. As processing aid, for example, a fatty acid soap-based processing aid manufactured by Schill+Seilacher GmbH can be used.

When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt, preferably a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaiyl-p-phenylenediamine, hindereddiaryl-p-phenylenediamine, phenylhexyl-p-phenylenediamine, and phenyloctyl-p-phenylenediamine, and a quinoline-based antioxidant such as 2,2,4-trimethyl-1,2-dihydroquinolin polymer and 6-ethoxy-2,2,4-trimethyl-1,2-dihydroquinolin. These antioxidants may be used alone or two or more thereof may be used in combination.

When the rubber composition comprises the antioxidant, the content thereof is, from the viewpoint of ozone crack resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoints of abrasion resistance and wet grip performance.

When the rubber composition comprises the stearic acid, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of vulcanization rate.

When the rubber composition comprises the zinc oxide, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of abrasion resistance.

Sulfur is appropriately used as the vulcanizing agent. As sulfur, a powdered sulfur, an oil-treated sulfur, a precipitated sulfur, a colloidal sulfur, an insoluble sulfur, a highly dispersible sulfur, and the like can be used.

When the rubber composition comprises the sulfur as the vulcanizing agent, the content thereof is, from the viewpoint of securing a sufficient vulcanization reaction, preferably 0.1 parts by mass or more, more preferably 0.3 parts by mass or more, further preferably 0.5 parts by mass or more based on 100 parts by mass the rubber component. Moreover, it is preferably 5.0 parts by mass or less, more preferably 4.0 parts by mass or less, further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based, a thiazole-based, a thiuram-based, a thiourea-based, a guanidine-based, a dithiocarbamic acid-based, an aldehyde-amine-based or aldehyde-ammonia-based, an imidazoline-based, a xantate-based vulcanization accelerator, or the like. These vulcanization accelerators may be used alone or two or more thereof may be used in combination. Among them, sulfenamide-based, guanidine-based, and thiazole-based vulcanization accelerators are preferable, and it is more preferable to use a sulfenamide-based vulcanization accelerator and a guanidine-based vulcanization accelerator in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfeneamide (CBS) is preferable.

Examples of the guanidine-based sulfide accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is preferably 1 part by mass or more, more preferably 2 parts by mass or more based on 100 parts by mass of the rubber component. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation at break tend to be able to be secured.

### <Manufacturing rubber compositions and tire>

The rubber composition according to the present embodiment can be manufactured by a known method. For example, it can be manufactured by a method of kneading each of the above-described components using a rubber kneading apparatus such as an open roll, Bunbury mixer, and a closed type kneader, followed by vulcanizing it, and the like.

Here, the kneading step of kneading each component can comprise a kneading step consisting of, for example, a base kneading step of kneading compounding agents and additives other than vulcanizing agents and vulcanization accelerators with a kneading machine such as a Banbury mixer, a kneader, and an open roll, and a final kneading (F kneading) step of adding vulcanizing agents and vulcanization accelerators to the kneaded product obtained in the base kneading step and kneading them. From the viewpoint of bonding a hydrophilic group on the surface of silica and a modified liquid butadiene-based rubber more efficiently to further improve water repellency of the rubber composition, it is preferable to divide the base kneading step into an X kneading step of producing a masterbatch comprising silica and a modified liquid butadiene-based rubber and a Y kneading step of adding the remaining compounding agents and additives other than vulcanizing agents and vulcanization accelerators to the masterbatch and kneading them. The silica and the modified liquid butadiene-based rubber may be placed in a total amount or a part thereof in the X kneading step.

The masterbatch can appropriately comprise a silane coupling agent, oil, and the like, in addition to silica and the modified liquid butadiene-based rubber. A content of the silane coupling agent when compounded based on silica in the masterbatch is similar as the content based on silica mentioned above.

A discharge temperature in the X kneading step is preferably 140 to 170°C, more preferably 145 to 165°C, because bonding between silica and a modified liquid butadiene-based rubber can be sufficiently promoted.

A kneading time in the X kneading step is, but not particularly limited to, preferably 2.0 to 10.0 minutes, more preferably 2.5 to 8.0 minutes, further preferably 3.0 to 7.0 minutes, because a kneaded product in which silica is well dispersed can be efficiently obtained.

The kneading time is a time from the start of kneading until the kneading temperature reaches the discharge temperature. In the X kneading step, it is preferable to knead for 1 to 5 minutes while maintaining the discharge temperature after reaching the discharge temperature, because bonding between silica and a modified liquid butadiene-based rubber can be further promoted.

Kneading temperature and time in the Y kneading step and the F kneading step are not particularly limited, and these steps can be performed under the conditions of the conventional base kneading step, etc. For example, in the Y kneading step, kneading is performed at a discharge temperature of 150 to 170°C for 3 to 10 minutes, and in the F kneading step, kneading is performed at 70 to 110°C for 1 to 5 minutes. Vulcanization conditions are not particularly limited, and examples thereof include, for example, a method of vulcanizing at 150 to 200°C for 10 to 30 minutes.

The rubber composition for a tire of the present disclosure can be appropriately used for various tire members (for example, a tread, a sidewall, a carcass coated rubber, a clinch, a chafer, a bead, a breaker cushion, an inner liner, etc.), particularly can be appropriately used as a tread for a tire from its characteristics.

The tire of the present disclosure can be manufactured by a usual method using the above-described rubber composition. That is, it can be manufactured by attaching a member, in which an unvulcanized rubber composition obtained by kneading each of the above-described components is extruded into a shape of a tire member such as a tread, together with other tire members on a tire molding machine and molding them by a usual method, thereby forming an unvulcanized tire, followed by heating and pressurizing this unvulcanized tire in a vulcanizing machine.

The tire of the present disclosure may be a pneumatic tire or a non-pneumatic tire. Moreover, it is appropriate as a racing tire, a tire for a passenger vehicle, a tire for a large passenger vehicle, a tire for a large SUV, a tire for a motorcycle, or the like, and can be used as respective summer tire, winter tire, or studless tire.

### EXAMPLE

Although the present disclosure will be described based on Examples, it is not limited to Examples only.

### <Evaluation>

Assuming that a tread composed of a rubber composition which composition is changed according to Tables 1 and 2 is used as a tread of a tire having a tire size of 195/65R15 by use of various chemicals shown below, silica dispersibility and fuel efficiency of the rubber composition were calculated. The results are described in the evaluation columns of Tables 1 and 2.

Various chemicals used in Examples and Comparative examples are collectively shown below.
NR: TSR20
SBR: Modified S-SBR (styrene content: 30% by mass, vinyl content: 52 mol%, Mw: 250,000, non-oil-extended product) produced in Production example 1 which will be described later
BR: UBEPOL BR150B (high cis BR, cis content: 96 mol%, Mw: 440,000) manufactured by Ube Industries, Ltd.
Modified liquid BR1: NISSO-PB GI-3000 (hydrogenated polybutadiene having hydroxyl groups at both ends, Mn = 3,100, 1,2-bond component content = 80 mol% or more) manufactured by Nippon Soda Co., Ltd.
Modified liquid BR2: TE-2000 (liquid polybutadiene methacrylate having methacryloyl groups at both ends of polybutadiene via urethane bond, Mn = 2,500, 1,2-bond component content = 88 mol%) manufactured by Nippon Soda Co., Ltd.
Hydrogenated thermoplastic elastomer 1: Tuftec H1062 (SEBS, containing 18% by mass of styrene as polymer block A) manufactured by Asahi Kasei Corporation
Hydrogenated thermoplastic elastomer 2: HYBRAR 5125 (SIS, containing 20% by mass of styrene as polymer block A) manufactured by Kuraray Co., Ltd.
Silica 1: ULTRASIL VN3 (N₂SA: 175m²/g, average primary particle size: 18 nm) manufactured by Evonik Degussa
Silica 2: ULTRASIL 9100GR (N₂SA: 230 m²/g, average primary particle size: 15 nm) manufactured by Evonik Degussa
Silane coupling agent 1: Si266 (bis(3-triethoxysilylpropyl)disulfide) manufactured by Evonik Degussa
Silane coupling agent 2: NXT-Z45 (mercapto-based silane coupling agent) manufactured by Momentive Performance Materials
Masterbatch 1: Masterbatch prepared in Production example 2 below
Carbon black: Show Black N220 manufactured by Cabot Japan K.K. (N₂SA: 111 m²/g)
Oil: Diana Process NH-70S manufactured by Idemitsu Kosan Co., Ltd.
Terpene-based resin: YS resin TO125 manufactured by Yasuhara Chemical Co., Ltd. (terpene-styrene resin, softening point: 125°C)
Zinc oxide: "Ginrei R" manufactured by Toho Zinc Co., Ltd.
Antioxidant: Antigen 6C (N-(1,3-dimethylbutyl)-N'-phenyl-p-phenylenediamine) manufactured by Sumitomo Chemical Co., Ltd.
Stearic acid: Bead stearic acid "Tsubaki" manufactured by NOF CORPORATION
Wax: OZOACE 0355 manufactured by Nippon Seiro Co., Ltd.
Sulfur: HK-200-5 (5% oil-containing powdered sulfur) manufactured by Hosoi Chemical Industry Co., Ltd.
Vulcanization accelerator 1: Nocceler D (N,N'-diphenylguanidine) manufactured by Ouchi Shinko Chemical Industrial Co., Ltd.
Vulcanization accelerator 2: Nocceler CZ-G (N-cyclohexyl-2-benzothiazolylsulfeneamide) manufactured by Ouchi Shinko Chemical Industrial Co., Ltd.

### Production example 1: Synthesis of modified S-SBR

Cyclohexane, tetrahydrofuran, styrene, and 1,3-butadiene were charged into a nitrogen-substituted autoclave reactor. The temperature of the contents in the reactor is adjusted to 20°C, and n-butyllithium is added to initiate polymerization. Polymerization is performed under an adiabatic condition, and the temperature reaches 85°C of the maximum temperature. When a polymerization conversion rate reaches 99%, 1,3-butadiene is added, and after further polymerization for 5 minutes, N,N-bis(trimethylsilyl)-3-aminopropyltrimethoxysilane is added as a modifying agent to perform reaction. After completion of the polymerization reaction, 2,6-di-tert-butyl-p-cresol is added. Next, the mixture is subjected to removal of solvent by a steam stripping and dried by a heat roll which temperature is adjusted to 110°C to obtain a modified S-SBR.

### Production example 2: Preparation of Masterbatch 1

Using a 1.0 L pressurized kneader, 10 parts by mass of a modified liquid BR2 and 60 parts by mass of silica 2 based on 100 parts by mass of the rubber component are mixed at 150°C for 4 minutes to prepare a masterbatch 1.

### (Examples and Comparative examples)

According to the compounding formulations shown in Tables 1 and 2, chemicals other than sulfur and vulcanization accelerators are kneaded at a discharge temperature of 150°C for 5 minutes using a 1.7 L Banbury mixer. Next, sulfur and vulcanization accelerators are added to the obtained kneaded product, and the mixture is kneaded with an open roll for 4 minutes until the temperature reaches 105°C to obtain an unvulcanized rubber composition. The obtained unvulcanized rubber composition is molded into a tread shape and attached together with other tire members to prepare an unvulcanized tire, followed by press-vulcanized at 170°C for 12 minutes to obtain a test tire.

### <Fuel efficiency>

Using a rolling resistance tester, a rolling resistance when tires are made run at 10°C and 25°C under a rim of 15 × 6JJ, an internal pressure of 230 kPa, a load of 3.43 kN, and a speed at 80 km/h is measured, and the inverse value is indicated as an index assuming that Reference Comparative example (Comparative example 1 in Table 1, and Comparative example 5 in Table 2, and the same applies hereinafter) are 100. The result shows that the higher the numerical value is, the lower the rolling resistance is and the better the fuel efficiency is.

### <Wet grip performance>

Each test tire is mounted to all wheels of a vehicle (domestic FF 2000cc), and by stepping on the brake while running at an initial speed of 100 km/h on a wet asphalt road surface, a braking distance is measured. Then, the measurement result is indicated as an index by the following equation. The result shows that the higher the index is, the better the wet grip performance is. (Wet grip performance index) = (braking distance in Comparative example 5)/(braking distance in each test tire) × 100

By performing each test described above based on the formulation contents in Tables 1 and 2, each index or a value close thereto can be obtained.

**Table 1**

| | | Example | | | | | | | | | | Comparative example | | | |
|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 |
| Compounding amount (part by mass) | | | | | | | | | | | | | | | |
| | NR | 35 | 35 | 35 | 35 | 35 | 20 | 40 | 40 | 40 | 40 | 35 | 35 | 35 | 100 |
| | BR | 60 | 60 | 60 | 60 | 60 | 75 | 55 | 55 | 55 | 55 | 60 | 60 | 60 | - |
| | SBR | 5 | 5 | 5 | 5 | 5 | 5 | 5 | 5 | 5 | 5 | 5 | 5 | 5 | - |
| | Modified liquid BR 1 | 10 | - | - | - | - | - | - | - | - | - | 10 | - | - | - |
| | Modified liquid BR 2 | | 10 | 10 | - | 10 | 10 | 10 | 10 | 40 | 40 | - | 10 | - | 10 |
| | Hydrogenated thermoplastic elastomer 1 | 10 | 10 | 10 | 10 | 10 | 10 | 10 | 10 | 10 | 10 | - | - | 10 | 10 |
| | Hydrogenated thermoplastic elastomer 2 | - | - | - | - | - | - | - | - | - | - | - | - | - | - |
| | Silica 1 | 60 | 60 | - | - | - | - | - | 60 | 60 | - | 60 | 60 | 60 | 60 |
| | Silica 2 | - | - | 60 | - | 60 | 60 | 60 | - | - | 60 | - | - | - | - |
| | Masterbatch 1 | - | - | - | 70 | - | - | - | - | - | - | - | - | - | - |
| | Carbon black | 4.0 | 4.0 | 4.0 | 4.0 | 4.0 | 4.0 | 4.0 | 4.0 | 4.0 | 4.0 | 4.0 | 4.0 | 4.0 | 4.0 |
| | Silane coupling agent 1 | 6.0 | 6.0 | 6.0 | 6.0 | - | - | - | - | - | - | 6.0 | 6.0 | 6.0 | 6.0 |
| | Silane coupling agent 2 | - | - | - | - | 6.0 | 6.0 | 6.0 | 6.0 | 6.0 | 6.0 | - | - | - | - |
| | Oil | 20 | 20 | 20 | 20 | 20 | 20 | 20 | 20 | - | - | 20 | 20 | 20 | 20 |
| | Terpene-based resin | - | - | - | - | - | - | - | - | - | - | - | - | - | - |
| | Zinc oxide | 3.0 | 3.0 | 3.0 | 3.0 | 3.0 | 3.0 | 3.0 | 3.0 | 3.0 | 3.0 | 3.0 | 3.0 | 3.0 | 3.0 |
| | Antioxidant | 2.0 | 2.0 | 2.0 | 2.0 | 2.0 | 2.0 | 2.0 | 2.0 | 2.0 | 2.0 | 2.0 | 2.0 | 2.0 | 2.0 |
| | Stearic acid | 2.0 | 2.0 | 2.0 | 2.0 | 2.0 | 2.0 | 2.0 | 2.0 | 2.0 | 2.0 | 2.0 | 2.0 | 2.0 | 2.0 |
| | Wax | 2.0 | 2.0 | 2.0 | 2.0 | 2.0 | 2.0 | 2.0 | 2.0 | 2.0 | 2.0 | 2.0 | 2.0 | 2.0 | 2.0 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 | 2.0 |

| Index | | | | | | | | | | | | | | | |
|---|---|---|---|---|---|---|---|---|---|---|---|---|---|---|---|
| | Fuel efficiency (10°C) | 105 | 103 | 110 | 115 | 120 | 125 | 115 | 110 | 120 | 125 | 100 | 95 | 90 | 75 |
| | Fuel efficiency (25°C) | 110 | 108 | 115 | 120 | 125 | 130 | 115 | 110 | 120 | 125 | 100 | 95 | 90 | 70 |

**Table 2**

| | | Example | | | | | | Comparative example | | |
|---|---|---|---|---|---|---|---|---|---|---|
| | | 11 | 12 | 13 | 14 | 15 | 16 | 5 | 6 | 7 |
| Compounding amount (part by mass) | | | | | | | | | | |
| | NR | 35 | 40 | 40 | 40 | 40 | 40 | 35 | 35 | 100 |
| | BR | 60 | 55 | 55 | 55 | 55 | 55 | 60 | 60 | - |
| | SBR | 5 | 5 | 5 | 5 | 5 | 5 | 5 | 5 | - |
| | Modified liquid BR 1 | | | | | | | | | |
| | Modified liquid BR 2 | 10 | 20 | 20 | 20 | 20 | 20 | 10 | - | 10 |
| | Hydrogenated thermoplastic elastomer 1 | 10 | 10 | 10 | 10 | - | 20 | - | 10 | 10 |
| | Hydrogenated thermoplastic elastomer 2 | - | - | - | - | 10 | - | - | - | - |
| | Silica 1 | - | - | - | - | - | - | - | - | - |
| | Silica 2 | 60 | 85 | 85 | 85 | 85 | 85 | 85 | 85 | 85 |
| | Masterbatch 1 | | | | | | | | | |
| | Carbon black | 3.0 | 3.0 | 3.0 | 3.0 | 3.0 | 3.0 | 4.0 | 4.0 | 4.0 |
| | Silane coupling agent 1 | - | - | | - | - | - | 6.0 | 6.0 | 6.0 |
| | Silane coupling agent 2 | 6.0 | 8.5 | 8.5 | 8.5 | 8.5 | 8.5 | - | - | - |
| | Oil | 20 | 20 | 10 | - | - | - | 20 | 20 | 20 |
| | Terpene-based resin | - | - | 10 | 20 | 20 | 15 | - | - | - |
| | Zinc oxide | 3.0 | 3.0 | 3.0 | 3.0 | 3.0 | 3.0 | 3.0 | 3.0 | 3.0 |
| | Antioxidant | 2.0 | 2.0 | 2.0 | 2.0 | 2.0 | 2.0 | 2.0 | 2.0 | 2.0 |
| | Stearic acid | 2.0 | 2.0 | 2.0 | 2.0 | 2.0 | 2.0 | 2.0 | 2.0 | 2.0 |
| | Wax | 2.0 | 2.0 | 2.0 | 2.0 | 2.0 | 2.0 | 2.0 | 2.0 | 2.0 |
| | Sulfur | 1.5 | 1.5 | 1.5 | 1.5 | 1.5 | 1.5 | 1.5 | 1.5 | 1.5 |
| | Vulcanization accelerator 1 | 1.8 | 1.8 | 1.8 | 1.8 | 1.8 | 1.8 | 1.8 | 1.8 | 1.8 |
| | Vulcanization accelerator 2 | 2.0 | 2.0 | 2.0 | 2.0 | 2.0 | 2.0 | 2.0 | 2.0 | 2.0 |

| Index | | | | | | | | | | |
|---|---|---|---|---|---|---|---|---|---|---|
| | Fuel efficiency (10°C) | 115 | 105 | 105 | 105 | 108 | 115 | 100 | 90 | 85 |
| | Fuel efficiency (25°C) | 115 | 105 | 105 | 105 | 108 | 115 | 100 | 90 | 80 |
| | Wet grip performance | 110 | 115 | 120 | 125 | 125 | 122 | 100 | 90 | 85 |

From the results in Tables 1 and 2, it can be seen that the rubber composition for a tire of the present disclosure, comprising a modified liquid butadiene-based rubber, a hydrogenated thermoplastic elastomer, and a silica, has improved silica dispersibility and improved fuel efficiency at low temperature and normal temperature. Moreover, it can be seen that, in a preferred embodiment, wet grip performance is also improved.

An object of the present invention is to provide a rubber composition for a tire having improved silica dispersibility and having improved fuel efficiency at low temperature and normal temperature. The rubber composition for a tire comprises a rubber component comprising a butadiene-based rubber, a modified liquid butadiene-based rubber, a hydrogenated thermoplastic elastomer, and a silica.

## Claims

1. A rubber composition for a tire comprising:
a rubber component comprising a butadiene-based rubber, a modified liquid butadiene-based rubber, a hydrogenated thermoplastic elastomer, and a silica.

2. The rubber composition for a tire of claim 1, wherein the modified liquid butadiene-based rubber is a liquid butadiene-based rubber modified at its terminal with one or more groups selected from the group consisting of a hydroxyl group, a carboxyl group, an acryloyl group, and a methacryloyl group.

3. The rubber composition for a tire of claim 1 or 2, comprising a masterbatch comprising the silica and the modified liquid butadiene-based rubber.

4. The rubber composition for a tire of any one of claims 1 to 3, comprising 15 to 70 parts by mass of the modified liquid butadiene-based rubber based on 100 parts by mass of the silica.

5. The rubber composition for a tire of any one of claims 1 to 4, comprising 5 to 40 parts by mass of the modified liquid butadiene-based rubber, 5 to 40 parts by mass of the hydrogenated thermoplastic elastomer, and 30 to 120 parts by mass of the silica based on 100 parts by mass of the rubber component comprising 50 to 80% by mass of the butadiene-based rubber.

6. The rubber composition for a tire of any one of claims 1 to 5, further comprising a mercapto-based silane coupling agent.

7. The rubber composition for a tire of any one of claims 1 to 6, further comprising an aromatic ring-containing resin.

8. The rubber composition for a tire of claim 7, wherein the aromatic ring-containing resin has a softening point of 90 to 160°C, wherein the softening point is defined as a temperature at which a sphere drops when the softening point specified in JIS K 6220-1: 2001 is measured with a ring and ball softening point measuring device.

9. A tire having a tire member composed of the rubber composition for a tire of any one of claims 1 to 8.

## Patentansprüche

1. Kautschukzusammensetzung für einen Reifen, umfassend:
eine Kautschukkomponente, die einen Kautschuk auf Butadienbasis, einen modifizierten flüssigen Kautschuk auf Butadienbasis, ein hydriertes thermoplastisches Elastomer und ein Siliciumdioxid umfasst.

2. Kautschukzusammensetzung für einen Reifen nach Anspruch 1, wobei der modifizierte flüssige Kautschuk auf Butadienbasis ein flüssiger Kautschuk auf Butadienbasis ist, der an seinem Ende mit einer oder mehreren Gruppen modifiziert ist, die aus der Gruppe ausgewählt sind, die aus einer Hydroxylgruppe, einer Carboxylgruppe, einer Acryloylgruppe und einer Methacryloylgruppe besteht.

3. Kautschukzusammensetzung für einen Reifen nach Anspruch 1 oder 2, umfassend ein Masterbatch, das das Siliciumdioxid und den modifizierten flüssigen Kautschuk auf Butadienbasis umfasst.

4. Kautschukzusammensetzung für einen Reifen nach einem der Ansprüche 1 bis 3, umfassend 15 bis 70 Masseteile des modifizierten flüssigen Kautschuks auf Butadienbasis, bezogen auf 100 Masseteile des Siliciumdioxids.

5. Kautschukzusammensetzung für einen Reifen nach einem der Ansprüche 1 bis 4, umfassend 5 bis 40 Masseteile des modifizierten flüssigen Kautschuks auf Butadienbasis, 5 bis 40 Masseteile des hydrierten thermoplastischen Elastomers und 30 bis 120 Masseteile des Siliciumdioxids, bezogen auf 100 Masseteile der Kautschukkomponente, die 50 bis 80 Masse-% des Kautschuks auf Butadienbasis umfasst.

6. Kautschukzusammensetzung für einen Reifen nach einem der Ansprüche 1 bis 5, die ferner ein mercapto-basiertes Silan-Kupplungsmittel umfasst.

7. Kautschukzusammensetzung für einen Reifen nach einem der Ansprüche 1 bis 6, die ferner ein aromatischen Ring enthaltendes Harz umfasst.

8. Kautschukzusammensetzung für einen Reifen nach Anspruch 7, wobei das aromatische Ring enthaltende Harz einen Erweichungspunkt von 90 bis 160°C aufweist, wobei der Erweichungspunkt als eine Temperatur definiert ist, bei welcher eine Kugel fällt, wenn der in JIS K 6220-1: 2001 spezifizierte Erweichungspunkt mit einem Ring- und Kugel-Erweichungspunkt-Messgerät gemessen wird.

9. Reifen mit einem Reifenelement, das aus der Kautschukzusammensetzung für einen Reifen nach einem der Ansprüche 1 bis 8 zusammengesetzt ist.

## Revendications

1. Composition de caoutchouc pour un pneu comprenant :
un composant de caoutchouc comprenant un caoutchouc à base de butadiène, un caoutchouc liquide modifié à base de butadiène, un élastomère thermoplastique hydrogéné, et une silice.

2. Composition de caoutchouc pour un pneu de la revendication 1, dans laquelle le caoutchouc liquide modifié à base de butadiène est un caoutchouc liquide à base de butadiène modifié à son terminal par un ou plusieurs groupes choisis dans le groupe constitué d'un groupe hydroxyle, d'un groupe carboxyle, d'un groupe acryloyle et d'un groupe méthacryloyle.

3. Composition de caoutchouc pour un pneu de la revendication 1 ou 2, comprenant un mélange maître comprenant la silice et le caoutchouc liquide modifié à base de butadiène.

4. Composition de caoutchouc pour un pneu de l'une des revendications 1 à 3, comprenant 15 à 70 parties en masse du caoutchouc liquide modifié à base de butadiène sur la base de 100 parties en masse de la silice.

5. Composition de caoutchouc pour un pneu de l'une des revendications 1 à 4, comprenant 5 à 40 parties en masse du caoutchouc liquide modifié à base de butadiène, 5 à 40 parties en masse de l'élastomère thermoplastique hydrogéné, et 30 à 120 parties en masse de la silice sur la base de 100 parties en masse du composant en caoutchouc comprenant 50 à 80 % en masse du caoutchouc à base de butadiène.

6. Composition de caoutchouc pour pneu de l'une des revendications 1 à 5, comprenant en outre un agent de couplage silane à base de mercapto.

7. Composition de caoutchouc pour un pneu de l'une des revendications 1 à 6, comprenant en outre une résine contenant un cycle aromatique.

8. Composition de caoutchouc pour un pneu de la revendication 7, dans laquelle la résine contenant un cycle aromatique a un point de ramollissement de 90 à 160°C, le point de ramollissement étant défini comme une température à laquelle une sphère tombe lorsque le point de ramollissement spécifié dans JIS K 6220-1 : 2001 est mesuré avec un appareil de mesure du point de ramollissement de l'anneau et de la bille.

9. Pneu ayant un élément de pneu composé de la composition de caoutchouc pour un pneu de l'une des revendications 1 à 8.
